# EUROPÄISCHE PATENTSCHRIFT

(11) **EP 0 755 743 B1**
(45) Veröffentlichungstag und Bekanntmachung des Hinweises auf die Patenterteilung: **16.01.2002**
(21) Anmeldenummer: 96111334.7
(22) Anmeldetag: 13.07.1996
(51) Int. Cl.: B23D 31/00, G08B 13/24

(54) **Verfahren und Vorrichtung zur Herstellung von deaktivierbaren Sicherungsstreifen**
Method and device for manufacturing deactivatable security tags
Procédé et dispositif pour fabriquer des étiquettes de sécurité désactivables

(30) Priorität: 27.07.1995 DE 19527404
(43) Veröffentlichungstag der Anmeldung: 29.01.1997
(73) Patentinhaber: Meto International GmbH, 69434 Hirschhorn/Neckar (DE)
(72) Erfinder: Robertson, Paul, Dr., Chrishall, Herts SG8 8QZ (GB); Fisher, John, Royston, Herts SG8 5SG (GB); Houzego, Peter, Oakington, Cambs CB4 5AD (GB)
(74) Vertreter: Menges, Rolf, Dipl.-Ing.

(56) Entgegenhaltungen:
- EP-A- 0 578 992
- WO-A-85/03379
- DE-A- 1 627 153

## Beschreibung

Die Erfindung betrifft eine Vorrichtung zur Längsteilung eines halbhart- oder hartmagnetischen Bandmaterials mit einer Auflage für das Bandmaterial; siehe WO-A 85 03379.

Zur Reduzierung von Inventurverlusten werden Sicherungsstreifen in zunehmendem Maße zur Artikelsicherung in Warenhäusern eingesetzt. Diese Sicherungsstreifen bestehen üblicherweise aus einem weichmagnetischen Bandmaterial, auf das oder in dessen Nähe in gewissen Abständen Abschnitte einer bestimmten Länge eines halbhart- oder hartmagnetischen Material aufgebracht sind.
Das weichmagnetische, aktivierbare Material (z.B. Permalloy) zeichnet sich durch eine hohe Permeabiliät und eine geringe Koerzitivkraft aus und wird in der Überwachungszone des Ein/Ausgangsbereich eines Warenhauses durch ein magnetisches Wechselfeld zur Ausstrahlung eines charakteristischen Signals angeregt. Dieses Signal wird nachfolgend von einer im Frequenzbereich des Signals empfindlichen Detektoreinrichtung erfaßt und als Identifizierungssignal für eine in unerlaubter Weise die Überwachungszone passierende Ware ausgewertet; ein Alarm wird ausgelöst.

Selbstverständlich soll die Detektoreinrichtung nicht mehr ansprechen, sobald die Ware ordnungsgemäß bezahlt worden ist. Diesem Zwecke dienen die halbhart- oder hartmagnetischen streifenförmigen Abschnitte, die beispielsweise aus Vacozet bestehen. Halbhart- oder hartmagnetisches Material besitzt die entgegengesetzten Eigenschaften von weichmagnetischem Material: es zeichnet sich durch eine niedrige Permeabilität und eine hohe Koerzitivkraft aus. Infolge der hohen Koerzitivkraft wird das Deaktivatormaterial im nicht-(de)aktivierten Zustand von dem magnetischen Wechselfeld in der Überwachungszone nicht beeinflußt. Sobald das Deaktivatormaterial jedoch durch ein entsprechend hohes Magnetfeld in die Sättigung getrieben wird - was nach ordnungsgemäßer Bezahlung der Ware erfolgt - unterbindet seine Magnetisierung eine Reaktion des weichmagnetischen Materials auf das magnetische Wechselfeld in der Überwachungszone.

Deaktivierbare Sicherungselemente werden in großen Stückzahlen verwendet. Da jedes Sicherungselement üblicherweise nur einmal zur Artikelsicherung eingesetzt wird, liegt ein besonderes Augenmerk auf einer kostengünstigen Fertigung. Aus der DE 42 23 394 A1 ist bereits ein Verfahren zur Herstellung von Sicherungsetiketten bekannt geworden, das die folgenden Fertigungsschritte umfaßt: auf ein nicht-metallisches Band werden ein hartmagnetischer Metallstreifen und danach auf den Metallstreifen eine elastische Trägerfolie aufgeklebt. Die Trägerfolie ist derart dick und flexibel, daß die Deformation des Metallstreifen durch ein rotierendes Stanzmesser ausreichend ist, um den Metallstreifen in einzelne Abschnitte zu trennen. Die herausgetrennten Abschnitte des Metallstreifens und des nicht-metallischen Bandes werden von der Trägerfolie abgezogen, und auf die verbleibenden Teile des Metallstreifens wird anschließend ein weichmagnetisches Band aufgebracht. Um ein fertiges Etikettenband herzustellen, wird - wie allgemein üblich - auf eine Seite des Bandes Etikettenpapier und auf die andere Seite ein Trägerband aufgeklebt.

Die Herstellung des halbhart oder hartmagnetischen Bandmaterials erfolgt üblicherweise über Heiß- und Kaltwalzen des Materials zu einer dünnen Folie (ca. 30 µm), die nachfolgend zwecks Herstellung des Bandmaterials in schmale Streifen unterteilt werden muß. Hierbei genügt es vollkommen, wenn das halbhart- oder hartmagnetische Bandmaterial dieselbe Breite wie das weichmagnetische Bandmaterial aufweist. Üblicherweise ist das halbhart- oder hartmagnetische Bandmaterial jedoch breiter, da seine Unterteilung in Streifen mit einer Breite unter 1mm überaus problematisch ist und bislang in größeren Produktionsmengen nicht möglich war.

Der Erfindung liegt die Aufgabe zugrunde, ein Verfahren und eine Vorrichtung vorzuschlagen, die eine Längsteilung von halbhart- oder hartmagnetischem Bandmaterial in einzelne Streifen bei hohen Produktionsgeschwindigkeiten erlauben.

Die erfindungsgemäße Vorrichtung, die die gestellte Aufgabe löst, weist die folgenden Merkmale auf: die Auflage weist parallel zur Längsrichtung des Bandmaterials zumindest eine Einkerbung auf, eine Klinge, die bis zu einer vorgegebenen Tiefe in die Einkerbung hineinragt und das Bandmaterial in die Einkerbung hineindrückt, ein Führungsteil, das in Laufrichtung des deformierten Bandmaterials angeordnet ist und die Deformation des Bandmaterials vergrößert, wobei das Führungsteil aus zwei seitlich zur Laufrichtung des Bandmaterials angeordneten Führungselementen besteht, deren Abstand sich in Laufrichtung des Bandmaterials verjüngt. Diese Ausgestaltung ist äußerst effektiv und läßt sich einfach und kostengünstig realisieren.

Eine vorteilhafte Weiterbildung der erfindungsgemäßen Vorrichtung schlägt vor, die Klinge auf dem Umfang eines rotierenden Elementes anzuordnen ist. Alternativ ist es jedoch gleichfalls möglich, die Klinge als feststehendes Element auszubilden.

Die Erfindung wird anhand der nachfolgenden Zeichnungen näher erläutert. Es zeigt:
Fig.1: eine perspektivische Darstellung einer ersten Ausführungsform der erfindungsgemäßen Vorrichtung und
Fig.2: eine perspektivische Darstellung einer weiteren Ausführungsform der erfindungsgemäßen Vorrichtung.

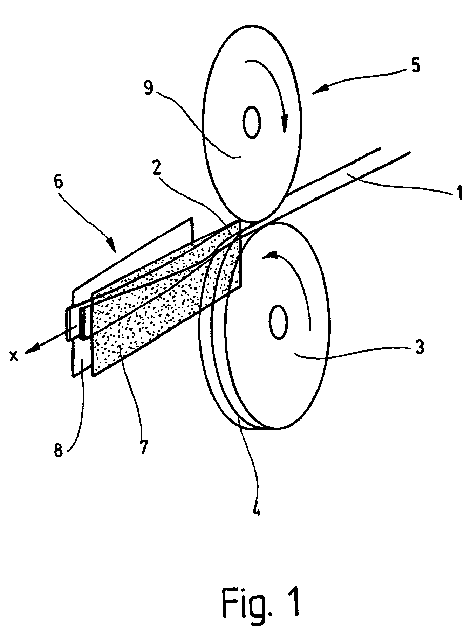

Fig.1 zeigt eine perspektivische Darstellung einer ersten Ausführungsform der erfindungsgemäßen Vorrichtung. Die erforderlichen Befestigungen der Einzelteile 3, 5, 7, 8 sind aus Übersichtsgründen in der Fig.1 nicht gesondert dargestellt. Das halbhart- oder hartmagnetische Bandmaterial 1, z.B. Vacozet®, wird über die Auflage 3 geführt. Bei der Auflage 3 handelt es sich um eine rotierende Scheibe, die auf ihrem Umfang eine Einkerbung 4 trägt. In diese Einkerbung 4 greift bis zu einer gewissen Tiefe die Außenkante des rotierenden Elementes 5 ein und drückt das Bandmaterial 1 in die Einkerbung 4. Durch das Zusammenspiel von Klinge 5 und Einkerbung 4 wird das Bandmaterial 1 längs einer im wesentlichen parallel zu einer Seitenkante verlaufenden Linie, die als Deformationslinie 2 bezeichnet wird, mechanisch verformt. Die Deformation des Bandmaterials 1 wird durch die beiden Führungselemente 7, 8, die in Laufrichtung x des Bandmaterials 1 angeordnet sind, solange verstärkt, bis das Bandmaterial 1 aufgrund seiner Sprödigkeit längs der Deformationslinie 2 bricht. Erreicht wird dies in einfacher Weise dadurch, daß sich der Abstand zwischen den beiden Führungselementen 7, 8 in Laufrichtung x des Bandmaterials 1 verjüngt.

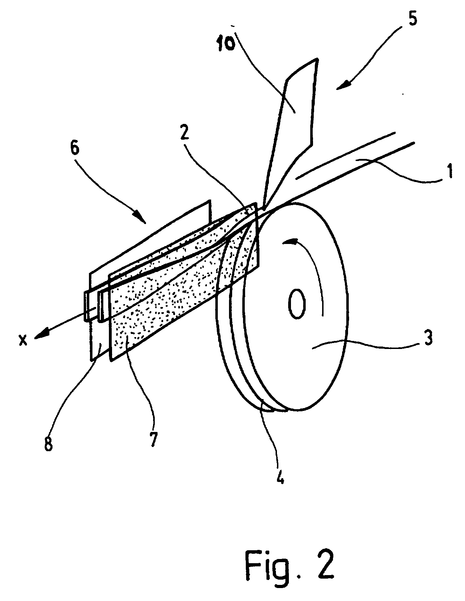

Die in Fig.2 gezeigte perspektivische Darstellung einer weiteren Ausführungsform der erfindungsgemäßen Vorrichtung, unterscheidet sich von der ersten nur in der Ausgestaltung der Klinge 5, die das Bandmaterial 1 in die Einkerbung 4 hineindrückt und es mechanisch deformiert. Das rotierende Element 9 ist hier durch ein feststehendes Element 10 ersetzt.

Selbstverständlich können mehrere der gezeigten Vorrichtungen parallel oder seriell vorgesehen sein, so daß sich das Bandmaterial 1 in einem Fertigungsprozeß in eine Vielzahl einzelner Streifen unterteilen läßt.

### Bezugszeichenliste

- 1: Bandmaterial
- 2: Deformationslinie
- 3: Auflage
- 4: Einkerbung
- 5: Klinge
- 6: Führungsteil
- 7: Führungselement
- 8: Führungselement
- 9: rotierendes Element
- 10: feststehendes Element

## Patentansprüche

1. Vorrichtung zur Längsteilung eines halbhart- oder hartmagnetischen Bandmaterials, mit einer Auflage (3) für das Bandmaterial (1) dadurch gekennzeicht, dass sie die folgenden Merkmale aufweist:
die Auflage (3) weist parallel zur Längsrichtung des Bandmaterials (1) zumindest eine Einkerbung (4) auf,
eine Klinge (5), die bis zu einer vorgegebenen Tiefe in die Einkerbung (4) hineinragt und das Bandmaterial (1) in die Einkerbung (4) hineindrückt,
ein Führungsteil (6), das in Laufrichtung des deformierten Bandmaterials (1) angeordnet ist und die Deformation des Bandmaterials (1) vergrößert, wobei das Führungsteil (6) aus zwei seitlich zur Laufrichtung (x) des Bandmaterials (1) angeordneten Führungselementen (7, 8) besteht, deren Abstand sich in Laufrichtung (x) des Bandmaterials (1) verjüngt.

2. Vorrichtung nach Anspruch 1, **dadurch gekennzeichnet, dass** die Klinge (5) auf dem Umfang eines rotierenden Elementes (9) angeordnet ist.

3. Vorrichtung nach Anspruch 1, **dadurch gekennzeichnet, dass** es sich bei der Klinge (5) um ein feststehendes Element (10) handelt.

## Claims

1. A device for longitudinally slitting a semi-hard or hard magnetic web material having a support (3) for the web material (1),
**characterized in that** it includes the following features:
the support (3) has at least one notch (4) extending parallel to the longitudinal direction of the web material (1),
a blade (5) projecting into the notch (4) up to a predetermined depth and forcing the web material (1) into the notch (4),
a guide part (6) arranged in the direction of travel of the deformed web material (1) and increasing the amount of deformation of the web material (1), said guide part (6) being comprised of two guide elements (7, 8) which are disposed laterally to the direction of travel (x) of the web material (1) and whose relative distance diminishes in the direction of travel (x) of the web material (1).

2. The device as claimed in claim 1,
**characterized in that** the blade (5) is arranged on the circumference of a rotary element (9).

3. The device as claimed in claim 1,
**characterized in that** the blade (5) is a stationary element (10).

## Revendications

1. Dispositif pour la division rectiligne d'un feuillard magnétique semi-dur ou dur, **caractérisé en ce qu'**il présente les particularités suivantes :
un support (3) de feuillard (1), lequel support (3) présente au moins une encoche (4) parallèle au sens longitudinal du feuillard (1),
une lame (5), qui pénètre dans l'encoche (4) jusqu'à une profondeur donnée et qui pousse le feuillard (1) dans l'encoche (4),
une pièce de guidage (6), placée dans le sens de déplacement du feuillard déformé (1) et qui augmente la déformation du feuillard (1), cette pièce de guidage (6) étant constituée de deux éléments de guidage (7, 8), placés de part et d'autre du sens de déplacement (x) du feuillard (1) et dont l'écartement diminue dans le sens de déplacement (x) du feuillard (1).

2. Dispositif selon la revendication 1, **caractérisé en ce que** la lame (5) est disposée sur la périphérie d'un élément rotatif (9).

3. Dispositif selon la revendication 1, **caractérisé en ce que** la lame (5) est un élément fixe (10).
